Europäisches Patentamt

European Patent Office

Office européen des brevets

(19)

(11) Numéro de publication : **0 394 076 B1**

(12)

# FASCICULE DE BREVET EUROPEEN

(45) Date de publication du fascicule du brevet :
**06.04.94 Bulletin 94/14**

(51) Int. Cl.⁵ : **A62B 7/14, A62B 9/02**

(21) Numéro de dépôt : **90400184.9**

(22) Date de dépôt : **23.01.90**

(54) **Dispositif de régulation altimétrique du débit d'oxygène gazeux associé à l'alimentation de masques respiratoires pour les passagers d'un avion.**

(30) Priorité : **21.04.89 FR 8905347**

(43) Date de publication de la demande :
**24.10.90 Bulletin 90/43**

(45) Mention de la délivrance du brevet :
**06.04.94 Bulletin 94/14**

(84) Etats contractants désignés :
**DE GB IT**

(56) Documents cités :
**FR-A- 1 214 998**
**GB-A- 793 452**
**GB-A- 865 084**
**US-A- 4 651 728**

(73) Titulaire : **SOCIETE DE FABRICATION
D'INSTRUMENTS DE MESURE (S.F.I.M.)
13, avenue Marcel Ramolfo-Garnier
F-91301 Massy (FR)**

(72) Inventeur : **Silber, Gérard
15 Résidence de la Croix-Blanche
F-91380 Chilly Mazarin (FR)**
Inventeur : **Renner, Gilles
21 Rue de Paris
F-91120 Palaiseau (FR)**

(74) Mandataire : **Schrimpf, Robert et al
Cabinet Regimbeau 26, Avenue Kléber
F-75116 Paris (FR)**

EP 0 394 076 B1

Jouve, 18, rue Saint-Denis, 75001 PARIS

## Description

L'invention concerne la régulation d'un débit de gaz, et plus précisément la régulation altimétrique de débit d'oxygène gazeux associé à l'alimentation de masques de protection respiratoires pour les passagers d'un avion.

Il s'agit donc de pouvoir contrôler le mieux possible le débit d'oxygène gazeux nécessaire à la survie des passagers embarqués à bord d'un avion de ligne en cas de décompression de la cabine de l'avion en vol à haute altitude.

Selon la technique la plus courante dans ce domaine, un tel dispositif comporte des réservoirs d'oxygène haute pression, un régulateur de pression monté en sortie desdits réservoirs, et un robinet en aval dudit régulateur de pression et en amont d'ensembles de masques respiratoires.

Le régulateur de pression, parfois appelé aussi détendeur, dont la fonction est de réguler la pression de sortie à une valeur basse stabilisée, par exemple 0,5 MPa, et ce quel que soit le débit.

Le robinet est quant à lui un robinet régulateur altimétrique, dont la fonction est d'assurer, dans le réseau de canalisations basse pression prévu en aval dudit robinet, une régulation en fonction de l'altitude de vol de l'avion.

Ainsi, dans un tel dispositif connu, un robinet régulateur altimétrique unique est prévu : il est centralisé dans l'avion pour alimenter l'ensemble du réseau de canalisations associées aux boîtes à masques lorsque cela est requis. Dans ce cas, on doit prévoir pour chaque masque respiratoire une dérivation de la canalisation centrale d'amenée en oxygène gazeux, avec d'abord un robinet qui doit s'ouvrir automatiquement quand le masque concerné est tiré, puis un dispositif à fuite calibrée pour limiter le débit (sous forme d'un étranglement et/ou d'un bouchon de matériau poreux tel que de la laine de verre), et enfin le masque proprement dit à l'extrémité de la dérivation.

Dès que cela est requis en raison d'une dépressurisation de la cabine de l'avion en vol à haute altitude, le robinet régulateur altimétrique devient passant, ce qui d'une part actionne les verrous pneumatiques des portes de boîtes à masques afin de commander l'ouverture de toutes les portes, et d'autre part envoie de l'oxygène à basse pression sur chacune des dérivations.

Un dispositif de ce type présente cependant de nombreux inconvénients.

La régulation altimétrique intervient en effet sur le réseau central, de sorte qu'il faut prévoir des canalisations et dérivations de diamètre suffisamment important pour que l'on dispose partout d'une pression d'oxygène constante au niveau de l'entrée de chacune des boîtes à masques, ceci afin d'éviter les pertes de charge, surtout pour les boîtes qui sont les plus éloignées.

Cet inconvénient est important car les diamètres importants influent sur la masse et l'encombrement du réseau de canalisations, mais surtout car la régulation reste imparfaite si l'on considère l'ensemble des boîtes à masques en raison des pertes de charge, ce qui signifie que les passagers situés en extrémité avant ou arrière de l'avion risquent d'être insuffisamment alimentés lors de l'utilisation des masques respiratoires.

De plus, un tel dispositif, ne comportant en principe aucune régulation concernant individuellement chaque boîte à masques, s'accomode mal de fluctuations de pression de l'oxygène gazeux.

En outre, cette conception rend le dispositif vulnérable dans la mesure où une panne de l'unique robinet régulateur altimétrique perturbe ipso facto tout le système.

Enfin, l'importance capitale de ce robinet régulateur altimétrique amène à prévoir une structure relativement complexe, et ce d'autant plus que ledit robinet doit assurer sel le débit global en oxygène gazeux.

On a également proposé d'utiliser un appareil unique combinant à la fois la fonction du robinet régulateur altimétrique et celle du régulateur de pression amont auquel sont reliées les sorties des réservoirs d'oxygène gazeux.

Un tel appareil est de structure extrêmement complexe.

Il comporte d'abord un premier étage correspondant à la fonction d'un robinet altimétrique (non régulateur), avec une capsule anéroïde actionnant, par l'intermédiaire d'un levier articulé, un clapet de type direct siège-clapet : en cas de dépressurisation de la cabine, la capsule se détend et commande l'ouverture du clapet.

Il comporte aussi un second étage de régulation altimétrique, avec un clapet d'entrée, une vanne de surpression (que les anglo-saxons désignent par le terme "surge valve") pour permettre une montée plus rapide en pression dans les canalisations, et un pointeau de régulation dont l'actionnement est commandé par une capsule anéroïde associée.

Ces différents organes sont complexes, en particulier la vanne de surpression qui comporte à tout le moins une membrane d'obturation et un orifice calibré.

Or il est difficile de simplifier ce dispositif, par exemple en renonçant à la vanne de surpression, en raison de l'organe unique de régulation ainsi réalisé sur le réseau, ce qui nécessite une mise en marche "poussée" du système en début de fonctionnement.

La présence d'un pointeau de régulation pose souvent des problèmes, et il exige un calibrage très précis de la vis pointeau, ce qui influe sur le coût du système sans parler des risques d'obturation ; on retrouve d'ailleurs ces mêmes inconvénients de par la présence d'un orifice calibré associé à la vanne de surpression.

Finalement, les appareils de ce type sont complexes, onéreux et délicats.

L'homme de métier serait de ce fait encore moins enclin à utiliser de tels appareils associés individuellement à chaque boîte à masques, dans le but d'éviter les inconvénients déjà mentionnés inhérents au principe d'une régulation centrale unique pour tout le réseau.

On a d'ailleurs tenté d'organiser une régulation effectuée individuellement pour chaque boîte à masques, mais toujours avec des appareils complexes à pointeau de régulation et orifice calibré, mais cette solution s'est révélée finalement peu satisfaisante, en raison du coût élevé impliqué et de la sécurité insuffisante du système global.

On a proposé dans la publication GB-A-793 452 un dispositif comportant un robinet altimétrique, fonctionnant en tout ou rien et n'assurant aucune fonction de régulation, relié en entrée à une source d'oxygène haute pression et un régulateur maître relié en entrée audit robinet et adapté à délivrer en sortie dans un réseau de distribution une haute pression intermédiaire fonction de l'altitude. Le réseau de distribution alimente un ensemble de masques à oxygène comportant chacun un régulateur esclave adapté à délivrer en sortie une pression fonction de ladite pression intermédiaire régnant dans le réseau de distribution. Le régulateur maître décrit dans cette publication est du type comprenant :

. un boîtier définissant une chambre intérieure ;

. une capsule anéroïde disposée dans ladite chambre et soumise en permanence à la pression régnant dans la cabine de l'avion ;

. un organe mobile d'étanchéité fermant ladite chambre et solidaire, d'un côté, d'une pièce d'appui dont l'extrémité libre peut être contactée par la face d'extrémité de la capsule anérolde, et de l'autre côté, d'un élément servant à actionner un pointeau associé à l'entrée d'oxygène.

Le régulateur maître présente les inconvénients précités inhérents à l'utilisation d'un pointeau et la sécurité globale du dispositif décrit dans cette publication est insuffisante en raison des conséquences sur la distribution d'oxygène pour tous les masques d'une défaillance du régulateur maître.

L'invention a pour objet de réaliser un dispositif de régulation ne présentant pas les inconvénients précités, notamment en organisant une régulation effectuée individuellement pour chaque boîte à masques.

L'invention a également pour objet de concevoir un dispositif qui soit de structure simple et d'un coût de production raisonnable, qui soit peu encombrant, et permettant en particulier d'éviter les inconvénients dus aux pertes de charge dans le réseau.

L'invention a aussi pour objet de concevoir un dispositif dont la sécurité soit sensiblement meilleure que celle des dispositifs connus, notamment en évitant une perturbation généralisée du système lors d'une panne localisée, tout en s'accomodant de fluctuations importantes de la pression d'alimentation.

Il s'agit plus particulièrement d'un dispositif de régulation altimétrique du débit d'oxygène gazeux associé à l'alimentation de masques respiratoires pour les passagers d'un avion, comportant des réservoirs d'oxygène haute pression, un régulateur de pression monté en sortie desdits réservoirs, et un robinet en aval dudit régulateur de pression et en amont d'ensembles de masques respiratoires, le robinet étant un simple robinet altimétrique, fonctionnant en tout ou rien, et n'assurant aucune fonction de régulation. De façon caractéristique la régulation du débit d'oxygène est assurée individuellement pour chaque ensemble de masques respiratoires par un moyen de régulation associé, chacun desdits moyens comportant de façon connue en soi :

. un boîtier définissant une chambre intérieure ;

. une capsule anéroïde disposée dans ladite chambre et soumise en permanence à la pression régnant dans la cabine de l'avion ;

. un organe mobile d'étanchéité fermant ladite chambre et solidaire, d'un côté, d'une pièce d'appui dont l'extrémité libre peut être contactée par la face d'extrémité de la capsule anéroïde, et de façon caractéristique, l'organe mobile est solidaire de l'autre côté, d'un élément servant à actionner un système d'obturation à clapet associé à l'entrée d'oxygène, de telle sorte que l'ouverture dudit système d'obturation soit automatiquement déclenchée par ladite capsule anéroïde lorsque la pression régnant dans la cabine descend en dessous d'un seuil critique prédéterminé, et que le débit d'oxygène délivré sous basse pression soit alors en permanence régulé en fonction de l'altitude de l'avion par ledit organe mobile d'étanchéité.

De préférence, l'organe mobile d'étanchéité est une membrane souple ; en particulier, la membrane souple porte deux coupelles de part et d'autre de celle-ci, l'une desdites coupelles supportant la pièce d'appui, et l'autre une tige d'actionnement du système d'obturation.

En variante, l'organe mobile d'étanchéité est un piston coulissant contre la paroi intérieure de la chambre du boîtier.

Avantageusement aussi, la pièce d'appui est cylindrique, et sensiblement coaxiale à la capsule anéroïde et présente une face d'extrémité libre en regard de la face d'extrémité de ladite capsule anéroïde ; en particulier, la pièce d'appui porte un organe ressort intermédiaire au contact duquel vient la face d'extrémité de la capsule anéroïde lorsque la pression régnant dans la cabine est légèrement supérieure au seuil critique, de façon à obtenir un débit d'oxygène préliminaire avant que le seuil critique ne soit atteint.

De préférence, le système d'obturation est un système à clapet du type direct siège/clapet, ou encore un système à clapet du type inversé siège/clapet avec bras de levier intermédiaire articulé.

Par sécurité, bien que cela ne soit nullement obligatoire, un moyen élastique, tel qu'un ressort hélicoïdal, est associé au système d'obturation, en vue d'un rappel en position de fermeture.

Avantageusement, la capsule anéroïde est reliée au boîtier par l'intermédiaire d'un système de réglage permettant de régler le jeu séparant ladite capsule anéroïde de la pièce d'appui associée.

Il est enfin intéressant de prévoir que le boîtier présente une sortie dans laquelle est disposé au moins un moyen de fuite calibrée. En particulier, le moyen de fuite calibrée est du type laminaire, et de préférence essentiellement constitué par un volume de matière perméable, telle que de la laine de verre, serré entre deux grilles transversales ; en variante, ce moyen est du type orifice calibré, et de préférence essentiellement constitué par une vis pointeau coaxiale à la sortie du boîtier.

D'autres caractéristiques et avantages de l'invention apparaîtront plus clairement à la lumière de la description qui va suivre et des dessins, annexés, concernant un mode de réalisation particulier, en référence au figures où :

- la figure 1 est une vue schématique d'un dispositif de régulation conforme à l'invention, illustrant une boîte à masques dont la porte est fermée, et une autre dont la porte est ouverte et dont les masques respiratoires associés sont tirés en position prête à l'utilisation, cette vue permettant aussi de localiser le moyen de régulation associé à chaque boîte à masques ;
- la figure 2 est une coupe illustrant un moyen de régulation conforme à l'invention, avec une capsule anéroïde, une membrane souple, un clapet du type direct, et une sortie équipée d'un moyen de fuite calibrée ;
- la figure 3 est une coupe partielle illustrant une variante à vis pointeau pour constituer le moyen de fuite calibrée équipant la sortie du boîtier ;
- la figure 4 est une coupe illustrant une variante du dispositif de la figure 2, dans laquelle le clapet est du type inversé avec bras de levier intermédiaire articulé ;
- la figure 5 illustre (à échelle plus faible) une modification possible du dispositif de la figure 4, dans laquelle est prévu un ressort intermédiaire coopérant avec la capsule anéroïde, pour permettre d'obtenir un débit préliminaire avant que le seuil critique de pression ne soit atteint ;
- la figure 6 illustre une autre modification du dispositif de la figure 4, dans laquelle la membrane élastique est remplacé par un piston coulissant dans le boîtier.

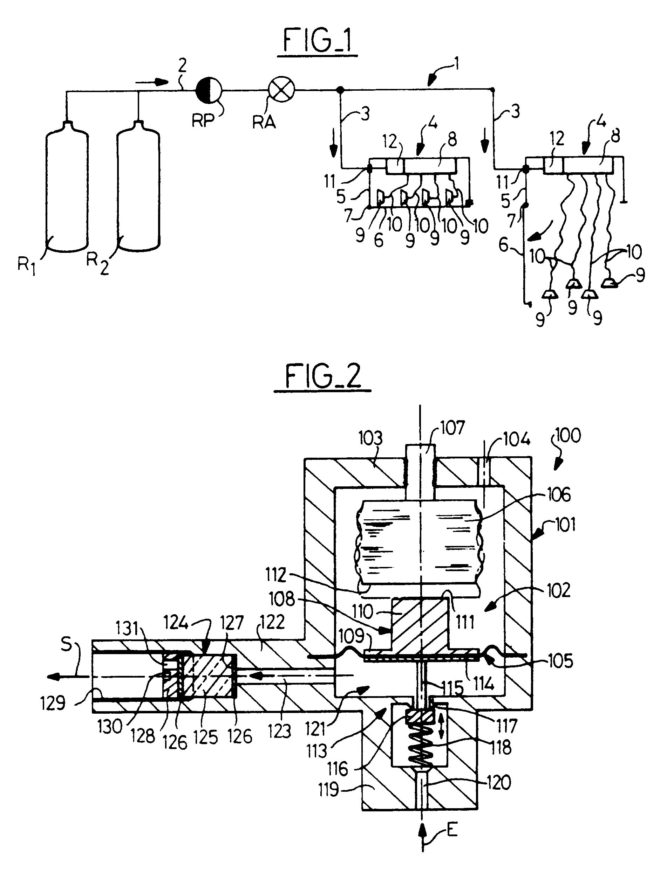

La figure 1 est une vue schématique d'un dispositif de régulation 1 conforme à l'invention, dispositif de régulation altimétrique du débit d'oxygène gazeux associé à l'alimentation de masques respiratoires pour les passagers d'un avion.

Le dispositif de régulation 1 comporte des réservoirs d'oxygène haute pression $R_1$, $R_2$ dont les sorties sont reliées à une canalisation commune 2. On trouve ensuite un régulateur de pression RP, monté en sortie des réservoirs $R_1$, $R_2$, et un robinet RA en aval du régulateur de pression RP et en amont d'ensembles de masques respiratoires 4.

Conformément à un aspect important de l'invention, le robinet RA est un simple robinet altimétrique, fonctionnant en tout ou rien, et n'assurant aucune fonction de régulation, la régulation du débit d'oxygène étant assurée individuellement pour chaque ensemble de masques respiratoires 4 par un moyen de régulation associé 12.

Sur la figure 1, on distingue deux ensembles de masques 4, reliés à la canalisation d'utilisation par une dérivation associée 3. Chaque ensemble 4 comporte une boîte 5 dont la porte 6 peut basculer autour d'une charnière 7, afin de laisser tomber les masques respiratoires. On a schématisé dans chaque ensemble 4 (pour l'ensemble de gauche, la porte 6 est fermée), un boîtier de connexion 8 auquel sont reliés des masques 9 par l'intermédiaire d'un tube souple 10. On distingue également la jonction 11 assurant le positionnement de la dérivation 3 dans la paroi de la boîte à masques. On distingue enfin, et représenté ici de façon purement schématique, un ensemble 12 qui constitue en fait le moyen de régulation associé à chaque boîte à masques. Ainsi qu'on peut le voir sur l'ensemble de masques respiratoires de droite, lorsque la porte 6 de la boîte a basculé, les masques respiratoires associés 9 sont en position prête à l'utilisation.

La représentation schématique de moyen de régulation 12 a seulement ici pour objet de bien faire comprendre que l'on parvient à réaliser une régulation associée à chaque ensemble individuel de masques respiratoires, ce qui permet d'utiliser pour le robinet RA un simple robinet altimétrique fonctionnant en tout ou rien. Ce robinet RA sera naturellement calé sur une pression typique représentant la valeur de seuil désirée, par exemple la pression correspondant à une altitude d'environ 3 400 mètres.

La figure 2 est une coupe illustrant plus en détail la structure d'un moyen de régulation conforme à l'invention, ce moyen étant ici référencé 100.

Le moyen de régulation 100 comporte un boîtier 101 définissant une chambre intérieure 102. La chambre intérieure 102 est délimitée par un fond 103 du boîtier, lequel présente un perçage 104 permettant à la chambre intérieure d'être soumise en permanence à la pression régnant dans la cabine de l'avion. De l'autre côté, la chambre intérieure est fermée par un organe mobile d'étanchéité 105, ici réalisé sous la forme d'une membrane souple.

On distingue également une capsule anéroïde 106 disposée dans la chambre intérieure 102, et soumise, en permanence à la pression régnant dans la cabine de l'avion. La capsule anéroïde est de préférence reliée au boîtier 101 par l'intermédiaire d'un système de réglage 107, par exemple un système à filetage-taraudage, permettant de régler le positionnement axial de la capsule anéroïde 106 dans la chambre intérieure 102.

Conformément à un aspect important de l'invention, la membrane souple 105 est solidaire, d'un côté, d'une pièce d'appui 108 dont l'extrémité libre 111 peut être contactée par la face d'extrémité 112 de la capsule anéroïde 106, et, de l'autre côté, d'un élément servant à actionner un système d'obturation 113 associé à l'entrée d'oxygène. De cette façon, l'ouverture du système d'obturation 113 est automatiquement déclenchée par la capsule anéroïde 106 lorsque la pression régnant dans la cabine descend en dessous d'un seuil critique prédéterminé, et le débit d'oxygène est alors en permanence régulé en fonction de l'altitude de l'avion par l'organe mobile d'étanchéité, ici réalisé sous la forme d'une membrane souple 105.

Plus précisément, la membrane souple 105 porte deux coupelles 109, 114 de part et d'autre de celle-ci, l'une 109 desdites coupelles supportant la pièce d'appui 110 précitée, et l'autre 114 une tige d'actionnement 115 du système d'obturation 113. La pièce d'appui 110 est ici cylindrique, et sensiblement coaxiale à la capsule anéroïde 106, et présente un face d'extrémité libre 111 en regard de la face d'extrémité 112 de ladite capsule anéroïde.

Le système d'obturation 113 est ici un système à clapet du type direct siège/clapet. On distingue en effet, dans une extension 119 du boîtier 101, un clapet 116 fixé en extrémité de la tige d'actionnement 115, et coopérant avec un siège 117 solidaire du boîtier. Un ressort ici hélicoïdal 118 est également associé au système d'obturation 113, en vue d'un rappel en position de fermeture : en fait, ainsi qu'on le verra par la suite avec la description du fonctionnement du dispositif, un tel ressort n'est nullement obligatoire. On distingue également, en extrémité de l'extension 119 du boîtier, un canal 120 correspondant à l'arrivée d'oxygène gazeux, comme schématisé par la flèche E.

On distingue ainsi une chambre 102 intérieure au boîtier 101 et située au-dessus de la membrane 105, et une chambre 121 située quant à elle en dessous de ladite membrane.

Ainsi qu'il est aisé de le comprendre, la face d'extrémité 112 de la capsule anéroïde 106 occupe une position axiale qui varie en fonction de la pression régnant dans la chambre 102, et donc dans la cabine de l'avion. Lorsque cette pression diminue, le soufflet constituant la cabine anéroïde se développe, et sa face d'extrémité 112 se rapproche de l'extrémité libre 111 de la pièce d'appui 110. Lorsqu'une pression critique correspondant à un seuil prédéterminé est atteinte, il y a contact entre les faces 111 et 112, ce qui correspond à la position illustrée en traits mixtes sur la figure 2 pour la capsule anéroïde 106. Dès que la pression dans la cabine descend en dessous de ce seuil critique, la capsule anéroïde 106 agit donc comme un élément actif de transmission de mouvement sur la membrane 105, par l'intermédiaire de la pièce d'appui 110. Ce mouvement vertical est transmis par l'intermédiaire de la tige 115 au clapet 116 du système d'obturation 113, ce qui provoque alors l'ouverture dudit système d'obturation.

On constate en outre que le boîtier 101 présente une sortie 122, ayant ici la forme d'une extension tubulaire, dans laquelle est disposé au moins un moyen de fuite calibrée. En l'espèce, au-delà de l'alésage de sortie 123 de la sortie 122, on distingue un moyen de fuite calibrée 124 du type laminaire, ici essentiellement constitué par un volume de matière perméable 125, tel que de la laine de verre, serré entre deux grilles transversales 126. Le maintien de ce moyen de fuite calibrée est assuré d'un côté par l'appui d'une grille 126 contre un épaulement 127 de la sortie 122, et de l'autre côté par une bague filetée extérieurement 128 pouvant tourner dans un filetage 129 de la sortie 122. La bague 128 présente une fente 130 permettant d'utiliser un outil d'actionnement tel qu'un tournevis, ainsi qu'un perçage traversant 131 pour laisser passer l'oxygène gazeux basse pression en aval du dispositif de régulation, comme symbolisé par la flèche de sortie S.

Lorsque la pression dans la cabine de l'avion n'est plus suffisante, les ensembles de protection respiratoire doivent entrer automatiquement en fonction. Dans ce cas, le robinet RA devient automatiquement passant, et l'oxygène gazeux stocké dans les réservoirs $R_1$, $R_2$ et détendu par le régulateur de pression RP vient alimenter le réseau de canalisation cabine. Cet ensemble de masques respiratoires 4 est ainsi alimenté par le réseau basse pression en oxygène, de sorte que chaque masque respiratoire 9, après ouverture de la porte de la boîte à masques, est correctement alimenté. Cette alimentation est effectuée avec un débit variant en fonction de l'altitude de vol de l'avion, ce qui assure une parfaite protection respiratoire du passager utilisant ce masque, et ce quelle que soit la place occupée par ce passager dans l'avion.

Il apparaît donc immédiatement un avantage important du dispositif de l'invention, selon lequel il est devenu inutile de prévoir des canalisations de gros diamètres, dès lors que la régulation est maintenant assurée individuellement au niveau de chaque boîte à masques. De même, la question des pertes de charge ne se pose plus ici, et l'on peut utiliser des canalisations de petits diamètres, moins encombrantes et moins lourdes pour réaliser le réseau. Ainsi qu'on le verra par la suite, le système permet en outre de tolérer aisément des fluctuations de pression, et même des fluctuations importantes pouvant s'étendre par exemple sur une plage allant de 0,35 MPa à 1 MPa.

Un autre avantage apparaît également dans la mesure où tout risque de panne localisée est automatiquement limité à la boîte à masques concernée, sans la moindre influence sur les autres ensembles de boîtes à masques.

Il convient enfin d'observer que la structure du dispositif 100 qui vient d'être décrite ne comporte aucun pointeau de régulation ni orifice calibré, ce qui supprime les risques d'obturation, et évite d'avoir à prévoir des calibrages très fins ou des usinages délicats.

Si l'on revient maintenant au fonctionnement du dispositif dans le cas où la pression de la cabine, pression que l'on peut noter $P_z$ à l'altitude de vol z et qui correspond à la pression régnant dans la chambre intérieure 102, devient inférieure à une pression critique prédéterminée $P_c$, la capsule anéroïde 106 présente alors une extension propre qui provoque l'ouverture du système d'obturation 113. La pression $P_s$ régnant dans la partie inférieure de la chambre 121, c'est-à-dire en dessous de la membrane 105, est supérieure à la pression $P_z$ régnant dans la chambre intérieure 102, au-dessus de ladite membrane. A l'ouverture du système siège/clapet, la pression $P_s$ s'élève ainsi jusqu'à une valeur telle que les forces appliquées sur la membrane souple 105 s'équilibrent. Si l'on désigne par $S_c$ la surface efficace de la face d'extrémité de la capsule anéroïde 106, la poussée F produite par ladite capsule est approximativement $F = S_c \times (P_c - P_z)$. Si l'on désigne en outre par $S_m$ la surface efficace de la membrane 105, l'équilibre de la membrane s'écrit donc :

$$(P_s - P_z) \times S_m - F = 0,$$

équation dans laquelle $P_s$ désigne la pression régnant sous la membrane souple 105.

Ceci permet d'écrire l'équation :

$$(P_s - P_z) \times S_m - S_c \times (P_c - P_z) = 0.$$

On en déduit alors l'expression :

$$(P_s - P_z) = (P_c - P_z) \times S_c / S_m. \quad (1)$$

Par ailleurs, la fuite calibrée permet d'exprimer le débit Q selon l'expression suivante : $Q = (P_s - P_z) \times \alpha_z$, expression dans laquelle Q correspond au débit masse de sortie, et $\alpha_z$ est un coefficient dépendant de l'altitude z et du réglage initial du dispositif (il s'agit en réalité d'un coefficient de perte de charge).

On en déduit finalement l'expression suivante :

$$Q = (P_c - P_z) \times S_c / S_m \times \alpha_z. \quad (2)$$

Cette dernière équation, montre que le débit masse de sortie ne dépend ici que de l'altitude de vol de l'avion z, par l'intermédiaire des paramètres $P_z$ et $\alpha_z$. Le débit masse Q dépend aussi également de la pression critique $P_c$, celle-ci pouvant être cependant fixée arbitrairement par réglage de la capsule anéroïde.

Il convient de noter que le débit masse Q ne varie pas avec la pression d'entrée. De plus, la pression $P_s$ n'est pas fonction du débit, ainsi que cela ressort de l'équation (1) précitée. Cette dernière constatation permet, si on le souhaite, d'alimenter plusieurs fuites calibrées, c'est-à-dire plusieurs masques respiratoires d'une même boîte, sans modification de réglage de celle-ci.

On notera enfin que le débit masse Q est une fonction croissante de l'altitude z, dans la mesure naturellement où cette altitude passe au-delà de l'altitude critique $z_c$ fixée arbitrairement par réglage. Dans la pratique, on a pu observer que le débit masse Q était en réalité toujours légèrement supérieur à la valeur de débit souhaité, cette dernière correspondant sensiblement à une droite sur un diagramme donnant Q en fonction de l'altitude z.

Il va de soi que plusieurs modifications peuvent être apportées à la structure du dispositif conforme à l'invention, sans pour cela s'écarter de la définition générale de l'invention.

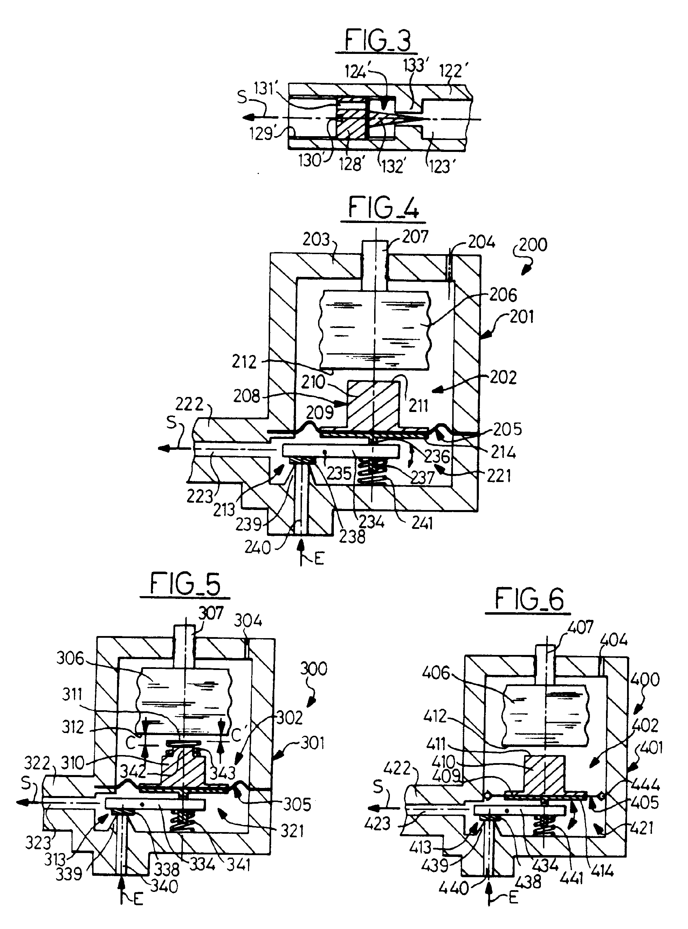

Une première variante est illustrée en figure 3, qui est une coupe partielle illustrant un autre type de moyen de fuite calibrée équipant la sortie du boîtier. En l'espèce, le moyen de fuite calibrée est ici du type orifice calibré, et est essentiellement constitué par une vis pointeau 128', 132', coaxiale à la sortie 122' du boîtier. Le moyen de fuite calibrée 124' ainsi constitué peut être aisément réglé grâce à une fente 130' permettant d'adapter la position longitudinale de la vis pointeau 128' dans le filetage associé 129', comme c'était le cas pour la bague 128 décrite en figure 2. La fuite calibrée correspond ici à l'intervalle défini par la pointe 132' de la vis pointeau et ledit alésage central formé par un épaulement 133' de la sortie 122'. Un perçage traversant 131' permet comme précédemment la sortie normale de l'oxygène gazeux en direction des masques respiratoires associés (flèche S).

La figure 4 est une coupe illustrant une variante du dispositif de la figure 2, dans laquelle le clapet est du type inversé avec bras de levier intermédiaire articulé. Le dispositif 200 illustré à la figure 4 comporte un grand nombre d'organes identiques à ceux constituant le dispositif 100 précédemment décrit : afin d'alléger la description, les organes identiques seront affectés des mêmes références augmentées de cent, et ne seront pas à nouveau décrits. La différence essentielle réside ici dans la structure du système d'obturation 213 : on distingue en effet un levier intermédiaire 234 articulé sur un axe 235 solidaire du boîtier 201. A l'une de ses extrémités, le levier 234 porte un clapet 238 qui coopère avec un siège 239 solidaire du boîtier 201. L'autre extrémité du levier 234 passe dans une ouverture 236 ménagée dans une extension 237 solidaire de la coupelle 214. Comme précédemment, un ressort ici hélicoïdal 241 est prévu pour un rappel du système d'obturation en position de fermeture (ou pourra naturellement remplacer le ressort 118 et/ou le ressort 241 par tout moyen équivalent assurant un rappel élastique, tel qu'un ressort à lame, etc...).

Le fonctionnement de ce dispositif modifié se conçoit aisément : lorsque la capsule anéroïde 206 agit directement sur la pièce d'appui 210, et donc sur la membrane 205, le levier 234 se met alors à pivoter autour de son axe 235, ce qui soulève le clapet 238 de son siège 239. Une telle disposition pourra en particulier s'avérer intéressante lorsque des efforts relativement importants seront nécessaires : ceci pourra être par exemple le cas si la membrane souple est remplacée par un piston, ainsi que cela va être décrit ci-après en regard de la figure 6.

La figure 5 illustre une modification possible du dispositif de la figure 4, dans laquelle est prévu un ressort intermédiaire coopérant avec la capsule anéroïde, pour permettre d'obtenir un débit préliminaire avant que le seuil critique de pression ne soit effectivement atteint.

Le dispositif de régulation 300 comporte, comme le dispositif précédent 200, un grand nombre d'organes identiques à ceux constituant le dispositif 100 de la figure 2 : les organes correspondants seront donc affectés des mêmes références augmentées de deux cents, et ne seront pas à nouveau décrits.

La principale différence réside ici dans la structure de la pièce d'appui 310, laquelle présente en partie supérieure une extension 342 de plus faible diamètre, extension qui reçoit un organe ressort réalisé ici sous la forme d'un ressort hélicoïdal 343. Il convient de noter que la partie supérieure de ce ressort est située au-dessous de la face d'extrémité 311 de la pièce d'appui 310, mais aussi en dessous de la face inférieure 312 de la capsule anéroïde 306, lorsque le système d'obturation 313 est fermé. Dans ce cas, on parvient ainsi à obtenir d'abord une première course c', puis une deuxième course plus longue, l'ensemble correspondant à la course c des variantes précédentes (mentionnée sur la figure 5) : en fonctionnement, lorsque la capsule anéroïde 306 se développe, pour une pression $P_z$ qui diminue, la course c' est d'abord réalisée, c'est-à-dire qu'il y a contact entre la face 312 de la capsule anéroïde 306 et le ressort 343, mais pas encore contact entre ladite face 312 et la face supérieure 311 de la pièce d'appui 310. Ceci produit alors une légère ouverture du système d'obturation 313, qui permet d'obtenir un débit préliminaire avant que le seuil critique de pression ne soit effectivement atteint, seuil critique correspondant quant à lui à la course complète c, et donc au contact direct des faces 311, 312 en regard.

La figure 6 illustre encore une autre modification du dispositif de la figure 4, dans laquelle la membrane élastique est remplacée par un piston coulissant dans le boîtier.

Le dispositif 400 illustré à la figure 6 comporte, comme pour les autres dispositifs, de nombreux organes identiques à ceux constituant le dispositif 100 illustré à la figure 2 : de ce fait, les organes identiques seront affectés des mêmes références augmentées de trois cents, et ne seront pas à nouveau décrits.

La principale différence réside ici dans la structure de l'organe mobile d'étanchéité 405, qui n'est plus une membrane souple comme dans les variantes précédentes, mais est constitué sous la forme d'un piston coulissant contre la paroi intérieure de la chambre 402 du boîtier 401. Il sera naturellement avantageusement prévu un joint torique d'étanchéité 444. Il convient cependant d'observer qu'un tel mode de réalisation implique des frottements plus importants, de sorte qu'il est préférable de disposer d'un système à levier pour l'actionnement du clapet, comme illustré sur la figure 6. Il convient d'ailleurs de noter que l'utilisation d'un tel bras de levier permet de diminuer l'effet de la pression amont sur la pression détendue.

L'invention n'est pas limitée aux modes de réalisation qui viennent d'être décrits, mais englobe au contraire toute variante reprenant, avec des moyens équivalents, les caractéristiques essentielles figurant aux revendications.

## Revendications

1. Dispositif de régulation altimétrique du débit d'oxygène gazeux associé à l'alimentation de masques respiratoires pour les passagers d'un avion, comportant des réservoirs d'oxygène haute pression, un régulateur de pression monté en sortie desdits réservoirs, et un robinet en aval dudit régulateur de pression et en amont d'ensembles de masques respiratoires, le robinet (RA) étant un simple robinet altimétrique, fonctionnant en tout ou rien, et n'assurant aucune fonction de régulation, caractérisé par le fait que la régulation du débit d'oxygène est assurée individuellement pour chaque ensemble de masques respiratoires (4) par un moyen de régulation associé (12 ; 100 ; 200 ; 300 ; 400), chacun desdits moyens comportant de façon connue en soi :

   . un boîtier (101 ; 201; 301 ; 401) définissant une chambre intérieure (102 ; 202 ; 302 ; 402) ;

   . une capsule anéroïde (106 ; 206 ; 306 ; 406) disposée dans ladite chambre et soumise en permanence à la pression régnant dans la cabine de l'avion ;

   . un organe mobile d'étanchéité (105 ; 205 ; 305 ; 405) fermant ladite chambre et solidaire, d'un côté, d'une pièce d'appui (108 ; 208 ; 308; 408) dont l'extrémité libre (111 ; 211 ; 311 ; 411) peut être contactée par la face d'extrémité (112 ; 212 ; 312 ; 412) de la capsule anéroïde (106 ; 206 ; 306 ; 406), et que l'organe mobile est solidaire de l'autre côté d'un élément servant à actionner un système d'obturation à clapet (113 ; 213 ; 313 ; 413) associé à l'entrée d'oxygène, de telle sorte que l'ouverture dudit système d'obturation soit automatiquement déclenchée par ladite capsule anéroïde lorsque la pression régnant dans la cabine descend en dessous d'un seuil critique prédéterminé, et que le débit d'oxygène délivré sous basse pression soit alors en permanence régulé en fonction de l'altitude de l'avion par ledit organe mobile d'étanchéité.

2. Dispositif selon la revendication 1, caractérisé par le fait que l'organe mobile d'étanchéité (105 ; 205 ; 305) est une membrane souple.

3. Dispositif selon la revendication 2, caractérisé par le fait que la membrane souple (105 ; 205 ; 305) porte deux coupelles (109, 114 ; 209, 214 ; 309 ; 314) de part de d'autre de celle-ci, l'une (109 ; 209 ; 309) desdites coupelles supportant la pièce d'appui, et l'autre (114 ; 214 ; 314) une tige d'actionnement du système d'obturation (113 ; 213 ; 313).

4. Dispositif selon la revendication 1, caractérisé par le fait que l'organe mobile d'étanchéité (405) est un piston coulissant contre la paroi intérieure de la chambre (402) du boîtier (401).

5. Dispositif selon l'une des revendications 1 à 4, caractérisé par le fait que la pièce d'appui (110 ; 210 ; 310 ; 410) est cylindrique, et sensiblement coaxiale à la capsule anéroïde (106 ; 206 ; 306 ; 406) et présente une face d'extrémité libre (111 ; 211 ; 311 ; 411) en regard de la face d'extrémité (112 ; 212 ; 312 ; 412) de ladite capsule anéroïde.

6. Dispositif selon la revendication 5, caractérisé par le fait que la pièce d'appui (310) porte un organe ressort intermédiaire (343) au contact duquel vient la face d'extrémité (312) de la capsule anéroïde (306) lorsque la pression régnant dans la cabine est légèrement supérieure au seuil critique, de façon à obtenir un débit d'oxygène préliminaire avant que le seuil critique ne soit atteint.

7. Dispositif selon l'une des revendications 1 à 6, caractérisé par le fait que le système d'obturation (113) est un système à clapet du type direct siège/clapet.

8. Dispositif selon l'une des revendications 1 à 6, caractérisé par le fait que le système d'obturation (213 ; 313 ; 413) est un système à clapet du type inversé siège/clapet avec bras de levier intermédiaire articulé (234 ; 334 ; 434).

9. Dispositif selon l'une des revendications 1 à 8, caractérisé par le fait qu'un moyen élastique (118 ; 241 ; 341 ; 441), tel qu'un ressort hélicoïdal, est associé au système d'obturation (113 ; 213 ; 313 ; 413), en vue d'un rappel en position de fermeture.

10. Dispositif selon l'une des revendications 1 à 9, caractérisé par le fait que la capsule anéroïde (106 ; 206 ; 306 ; 406) est reliée au boîtier (101 ; 201 ; 301 ; 410) par l'intermédiaire système de réglage (107 ; 207 ; 307 ; 407) permettant de régler le jeu séparant ladite capsule anéroïde de la pièce d'appui associée (110 ; 210 ; 310 ; 410).

11. Dispositif selon l'une des revendications 1 à 10, caractérisé par le fait que le boîtier (101 ; 201 ; 301 ; 401) présente une sortie (122 ; 222; 322 ; 422) dans laquelle est disposé au moins un moyen de fuite calibrée.

12. Dispositif selon la revendication 11, caractérisé par le fait que le moyen de fuite calibré (124) est du type laminaire, et de préférence essentiellement constitué par un volume de matière perméable (125), telle que de la laine de verre, serré entre deux grilles transversales (126).

13. Dispositif selon la revendication 11, caractérisé par le fait que le moyen de fuite calibrée (124') est du type orifice calibré, et de préférence essentiellement constitué par une vis pointeau (128', 132') coaxiale à la sortie (122') du boîtier.

## Claims

1. Device for altimetric regulation of the delivery of gaseous oxygen associated with the supply of breathing masks for passengers of an aircraft, including high-pressure oxygen tanks, a pressure regulator mounted at the outlet of the said tanks, and a tap downstream of the said pressure regulator and upstream of sets of breathing masks, the tap (RA) being a simple altimetric tap, operating in on or off mode, and providing no regulating function, characterized in that the oxygen delivery is regulated individually for each set of breathing masks (4) by an associated regulating means (12; 100; 200; 300; 400), each of the said means including, in a manner which is known per se:

- a casing (101; 201; 301; 401) defining an internal chamber (102; 202; 302; 402);
- an aneroid capsule (106; 206; 306; 406) located in the said chamber and permanently subjected to the pressure prevailing in the cabin of the aircraft;

- a moving sealing member (105; 205; 305; 405) which closes the said chamber and is solidly attached, on one side, to a bearing piece (108; 208; 308; 408) whose free end (111; 211; 311; 411) may be contacted by the end face (112; 212; 312; 412) of the aneroid capsule (106; 206; 306; 406), and in that the moving member is solidly attached, on the other side, to an element serving to actuate a valve shut-off system (113; 213; 313; 413) associated with the oxygen inlet, such that opening of the said shut-off system is automatically triggered by the said aneroid capsule when the pressure prevailing in the cabin falls below a predetermined critical threshold, and that the oxygen delivery triggered under low pressure is thus permanently regulated as a function of the altitude of the aircraft by the said moving sealing member.

2. Device according to Claim 1, characterized in that the moving sealing member (105; 205; 305) is a flexible diaphragm.

3. Device according to Claim 2, characterized in that the flexible diaphragm (105; 205; 305) carries two dishes (109, 114; 209, 214; 309; 314) on either side of it, one (109; 209; 309) of the said dishes supporting the bearing piece, and the other (114; 214; 314) carrying a rod for actuation of the shut-off system (113; 213; 313).

4. Device according to Claim 1, characterized in that the moving sealing member (405) is a piston sliding against the internal wall of the chamber (402) of the casing (401).

5. Device according to one of Claims 1 to 4, characterized in that the bearing piece (110; 210; 310; 410) is cylindrical, and substantially coaxial with the aneroid capsule (106; 206; 306; 406) and has a free end face (111; 211; 311; 411) facing the end face (112; 212; 312; 412) of the said aneroid capsule.

6. Device according to Claim 5, characterized in that the bearing piece (310) carries an intermediate spring member (343) with which the end face (312) of the aneroid capsule (306) comes into contact when the pressure prevailing in the cabin is slightly greater than the critical threshold, so as to obtain a preliminary delivery of oxygen before the critical threshold is reached.

7. Device according to one of Claims 1 to 6, characterized in that the shut-off system (113) is a valve system of the direct seat/valve type.

8. Device according to one of Claims 1 to 6, characterized in that the shut-off system (213; 313; 413) is a valve system of the reversed seat/valve type with an articulated intermediate lever arm (234; 334; 434).

9. Device according to one of Claims 1 to 8, characterized in that an elastic means (118; 241; 341; 441), such as a coil spring, is associated with the shut-off system (113; 213; 313; 413), with a view to returning to the closed position.

10. Device according to one of Claims 1 to 9, characterized in that the aneroid capsule (106; 206; 306; 406) is connected to the casing (101; 201; 301; 401) via an adjustment system (107; 207; 307; 407) making it possible to adjust the clearance separating the said aneroid capsule from the associated bearing piece (110; 210; 310; 410).

11. Device according to one of Claims 1 to 10, characterized in that the casing (101; 201; 301; 401) has an outlet (122; 222; 322; 422) in which at least one calibrated leakage means is located.

12. Device according to Claim 11, characterized in that the calibrated leakage means (124) is of the laminar type, and preferably essentially consists of a volume of permeable material (125), such as glass wool, pressed between two transverse grills (126).

13. Device according to Claim 11, characterized in that the calibrated leakage means (124') is of the calibrated orifice type, and preferably essentially consists of a set screw (128', 132') coaxial with the outlet (122') of the casing.

**Patentansprüche**

1. Höhenabhängige, an Flugzeugpassagieratemmasken liefernde Sauerstoffgasstromregulierungsvorrichtung, bestehend aus Hochdrucksauerstoffbehältern, einem Druckregler am Ausgang der genannten Behälter und einem hinter dem genannten Druckregler und vor der Sauerstoffmaskenanordnung liegenden Ventil, wobei das Ventil (RA) ein einfaches Höhendruckventil mit Alles-Oder-NichtsFunktionsweise, die keine Regelung zuläßt, ist, dadurch gekennzeichnet, daß die Regelung des Sauerstoffdurchsatzes für jede einzelne Sauerstoffmaskenanordnung (4) durch eine damit verbundene Reguliervorrichtung (12; 100; 200; 300; 400) gesichert ist, wobei jedes der genannten Mittel an sich vorbekannt ist, bestehend aus:

- einem Gehäuse (101; 201; 301; 401), das eine innere Kammer (102; 202; 302; 402) begrenzt;
- einer Aneroidkapsel (106; 206; 306; 406), die in der genannten Kammer angeordnet ist und ständig dem in der Flugzeugkabine herrschenden Druck ausgesetzt ist;
- einem beweglichen Dichtungselement (105; 205; 305; 405), das die genannte Kammer abschließt und an einer Seite einstückig mit einem Anschlagstück (108; 208; 308; 408) ist, dessen freies Ende (111; 211; 311; 411) mit der Endfläche (112; 212; 312; 412) der Aneroidkapsel (106; 206; 306; 406) kontaktiert werden kann und, daß das bewegliche Dichtungselement einstückig mit der anderen Seite eines Elementes zur Betätigung eines Schließventilsystems (113; 213; 313; 413) ist, das dem Sauerstoffeingang zugeordnet ist, so daß die Öffnung des genannten Schließventilsystems selbsttätig durch die genannte Aneroidkapsel ausgelöst wird, wenn der in der Kabine herrschende Druck unter einen vorbestimmten kritischen Wert sinkt und, daß der unter Niederdruck abfallende Sauerstoffdurchsatz also ständig in Abhängigkeit von der Flughöhe durch das genannte bewegliche Dichtungselement geregelt wird.

2. Vorrichtung nach Anspruch 1, dadurch gekennzeichnet, daß das bewegliche Dichtungselement (105; 205; 305) eine weiche Membran ist.

3. Vorrichtung nach Anspruch 2, dadurch gekennzeichnet, daß die weiche Membran (105; 205; 305) zwei einander gegenüberliegende Klemmplatten (109, 114; 209, 214; 309, 314) trägt, wobei die eine (109; 209; 309) der genannten Klemmplatten das Anschlagstück und die andere (114; 214; 314) eine Betätigungsstange des Schließventilsystems (113; 213; 313) hält.

4. Vorrichtung nach Anspruch 1, dadurch gekennzeichnet, daß das bewegliche Dichtungselement (405) ein gegen die Innenwand der Kammer (402) des Gehäuses (401) gleitender Kolben ist.

5. Vorrichtung nach einem der Ansprüche 1 bis 4, dadurch gekennzeichnet, daß das Anschlagstück (110; 210; 310; 410) zylindrisch und genau koaxial zur Aneroidkapsel (106; 206; 306; 406) ist und ein freies Ende (111; 211; 311; 411) der Endfläche (112; 212; 312; 412) der genannten Aneroidkapsel gegenüberliegt.

6. Vorrichtung nach Anspruch 5, dadurch gekennzeichnet, daß das Anschlagstück (310) ein dazwischen angeordnetes Federorgan (343) trägt, das mit der Endfläche (312) der Aneroidkapsel (306) in Kontakt kommt, sobald der in der Kabine herrschende Druck leicht über den kritischen Wert steigt, um einen vorzeitigen Sauerstoffdurchsatz zu erhalten, bevor der kritische Wert erreicht wird.

7. Vorrichtung nach einem der Ansprüche 1 bis 6, dadurch gekennzeichnet, daß das Schließventilsystem (113) ein Ventilsystem der direkten Sitz/Teller-Bauart ist.

8. Vorrichtung nach einem der Ansprüche 1 bis 6, dadurch gekennzeichnet, daß das Schließventilsystem (213; 313; 413) ein Ventilsystem der inversen Sitz/Teller-Bauart mit angelenkten Zwischenhebeln (234; 334; 434) ist.

9. Vorrichtung nach einem der Ansprüche 1 bis 8, dadurch gekennzeichnet, daß ein elastisches Mittel (118; 241; 341; 441), wie eine Schraubenfeder, mit dem Schließventilsystem (113; 213; 313; 413) für eine Rückkehr in die Schließposition verbunden ist.

10. Vorrichtung nach einem der Ansprüche 1 bis 9, dadurch gekennzeichnet, daß die Aneroidkapsel (106; 206; 306; 406) mit dem Gehäuse (101; 201; 301; 401) durch Zwischenschaltung eines Regelsystems (107; 207; 307; 407) verbunden ist, das den Spielraum zwischen der genannten Aneroidkapsel und dem zugeordneten Anschlagstück (110; 210; 310; 410) zu regeln erlaubt.

11. Vorrichtung nach einem der Ansprüche 1 bis 10, dadurch gekennzeichnet, daß das Gehäuse (101; 201; 301; 401) einen Ausgang (122; 222; 322; 422) aufweist, in dem mindestens ein kalibriertes Ausflußmittel angeordnet ist.

12. Vorrichtung nach Anspruch 11, dadurch gekennzeichnet, daß das kalibrierte Ausflußmittel (124) von laminarer Bauart ist und bevorzugt im wesentlichen aus einem Körper aus durchlässigem Werkstoff (125), wie Glaswolle, besteht, der zwischen zwei quer angeordneten Gittern (126) eingespannt ist.

13. Vorrichtung nach Anspruch 11, dadurch gekennzeichnet, daß das kalibrierte Ausflußmittel (124') von der Bauart mit kalibrierter Öffnung ist und bevorzugt im wesentlichen aus einer Schraubenspitze (128', 132') besteht, die koaxial zum Ausgang (122') des Gehäuses angeordnet ist.

## FIG_1

## FIG_2

FIG_3

FIG_4

FIG_5

FIG_6